# EUROPEAN PATENT SPECIFICATION

(11) **EP 0 198 920 B1**
(45) Date of publication and mention of the grant of the patent: **28.04.1993**
(21) Application number: 85905951.1
(22) Date of filing: 07.10.1985
(51) Int. Cl.: G01N 27/60

(54) **FLOW MEASURING APPARATUS WITH ANALOG, ESSENTIALLY LINEAR OUTPUT**
DURCHFLUSSMESSGERÄT MIT EINEM ANALOGEN, IM WESEN LINEAREN AUSGANG
APPAREIL DE MESURE DE DEBIT AVEC SORTIE ANALOGIQUE ESSENTIELLEMENT LINEAIRE

(30) Priority: 09.10.1984 US 658587
(43) Date of publication of application: 29.10.1986
(73) Proprietor: AUBURN INTERNATIONAL, INC., Danvers Massachusetts 01923-5008 (US)
(72) Inventor: DeCHENE, Ronald, L., 8 Electronis Avenue Danvers, MA 01923 (US); NEWTON, Robert, E., 8 Electronics AvenueDanvers, MA 01923 (US)
(74) Representative: Jones, Ian
(86) International application number: PCT/US85/01945
(87) International publication number: WO 86/02454

(56) References cited:
- DE-A- 2 229 703
- GB-A- 2 096 323
- US-A- 3 359 796
- US-A- 3 857 066
- US-A- 4 101 825
- US-A- 4 233 562

## Description

The present invention relates to flow measuring apparatus, suitable for measurement of flow velocity and mass flow rates.

The measurement of gas flows with solid particles therein, and of certain fluids which behave similarly, is a substantial and unresolved problem in several industries --e.g., chemical processing, food handling, transport loading and unloading, filtration, aeronautics, combustion fuel feed. The state of the art is limited to complicated sample and weigh and costly in-line, real time wave energy scanning devices (ionization, x-ray, ultrasound, back-scattering, seeding with nuclear or optical emitting traces and read-out by corresponding scanners). The prior art has also used standard fluid flow meters with a density correction on account of contained solids.

Thus, GB-A-2 096 323 describes a corona-discharge type gas flow meter including a discharge electrode and split collecting electrodes connected to input amplifiers which act as current-to-voltage converters receiving a reference signal from an integrator acting to integrate the sum of the outputs of the input amplifiers. The integrator output is used to control an EHT supply for the discharge. An output amplifier provides a flow signal by summing the signal from one input amplifier, from a variable offset nulling signal derived via an amplifier from the integrator, and a fixed offset nulling signal from a potentiometer.

GB-A-2 096 323 thus describes a flow measuring apparatus comprising sensor electrode means insertable into a flow conduit, a read-out circuit including a current to voltage conversion device, and an end use device.

It is a principal object of the invention to provide a relatively simple, low cost (capital and operational), low maintenance, sensor of flow giving an essentially linear, analog input that is accurate and available in real time.

The invention accordingly provides a flow measuring apparatus comprising sensor electrode means insertable into a flow conduit, a read-out circuit including a current to voltage conversion device, and an end use device, characterized in that the sensor electrode means comprises a triboelectric sensor electrode insertable into a flow conduit for flow of solid particles (FP) in a suspending fluid and arranged for charge transfer interaction with the particles, and in that the read-out circuit couples the electrode to earth via the current-to-voltage conversion device, the conversion device having a conversion factor adjustable from 1x10⁸ V/A to 1x10¹² V/A, and comprises an absolute value device, and adjustment means to adjust the current-to-voltage conversion device essentially continuously to counteract zero drifts induced therein by ambient temperature changes.

The charge which is transferred to the sensor electrode, a metal probe, returns to earth through the read-out circuit, constituting an input current to the circuit. The rate of charge transfer is approximately proportional to the flow rate of solids impacting the probe.

Triboelectric monitoring has been described in U.S. Patent 3,359,796 granted to R.C. Dimick. The industrial arts were not advanced by this disclosure because a triboelectric probe in a gas/solid stream encounters a variety of unusual conditions and problems, which have been recognized, and overcome by the present invention.

The current to voltage converison device preferably has the conversion gain adjustable in X10 steps with 10:1 continuous adjustment.

The absolute value circuit is employed to provide a unipolar signal, since either polarity of charge transfer may occur at the probe. An adjustable low pass filter can follow the absolute value circuit to provide damping of high frequency signal components.

Due to offset voltage and current characteristics of the current to voltage converison device, the output of the device will vary with ambient temperature and the adjustment means eliminates this temperature effect. The adjustment means can comprise an auto-zero circuit connected so as to rezero the device periodically (about once per minute). An asymetric timing circuit disconnects the amplifier input by energizing the input relay and connects an integrator circuit, so as to provide negative feedback to zero the current to voltage conversion circuit. The integrator maintains the zeroing level. A sample and hold circuit is used to hold the present output signal during the zeroing cycle. A time delay circuit causes the output to be held until the converter has settled after the zeroing cycle.

The current signal from the sensor electrode is conducted to the read-out circuit through an ultra low noise coaxial cable. An over voltage protector is installed at the electrode to prevent voltage build-up in the event of cable disconnection, and a current limiting barrier resistor is placed between an input summing junction and the remainder of the circuit to ensure that the sensing electrode and the cable are intrinsically safe, thus allowing the probe to be installed in hazardous areas.

The end use device can comprise a meter for displaying the flow signal and to assist in adjusting the instrument. The output signal, at 0-8 volts, can be converted to 4-20 mA to provide a standard instrumentation output.

An adjustable set point relay output can also be provided so that an alarm or control function can be initiated at a selected flow level. The meter can also be used to set the relay set point.

The invention is further described below, by way of example, with reference to the accompanying drawing, in which:
FIG. 1 schematically illustrates a flow meter apparatus in accordance with the invention;
FIG. 1A shows a threshold circuit included in the apparatus of Fig. 1;
FIG. 2 shows an absolute value circuit included in the apparatus of FIG. 1, and
FIG. 3 shows a voltage-to-current circuit included in the apparatus of FIG. 1.

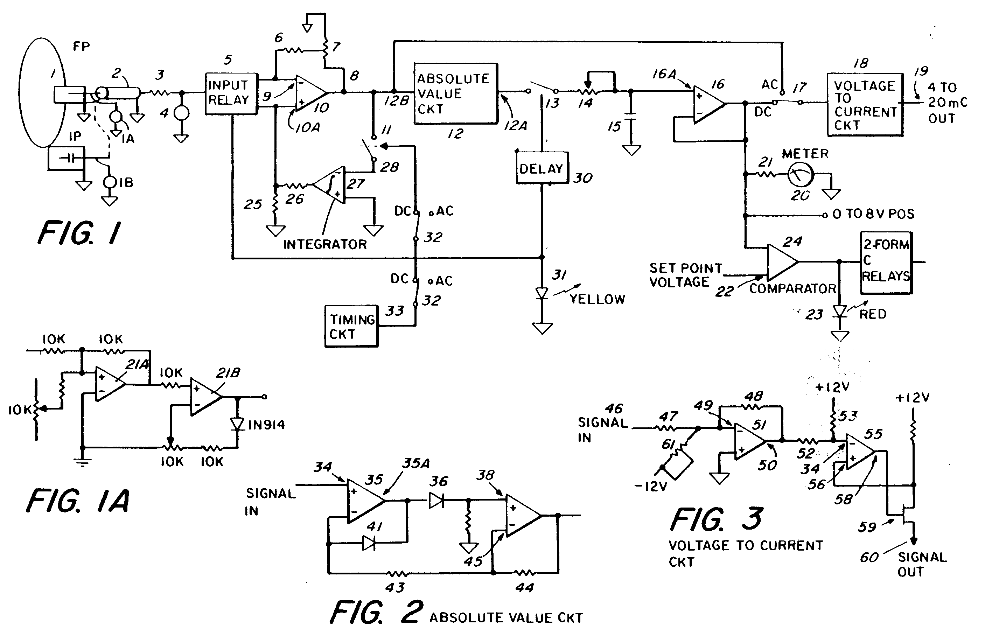

FIG. 1 is a schematic of electronic circuitry of the illustrated flowmeter apparatus which amplifies and conditions a signal from a triboelectric probe 1 inserted into a flow pipe Fp. The circuitry provides a standard instrumentation current output at 19 and a 0 to 8 Volts voltage output. It also drives a meter 20 and inputs a signal to a threshold circuit comprising a comparator 22 and an operational amplifier in two stages 21A, 21B with differential adjustment (FIG. 1A) which actuates a relay 24.

The single ended signal from the probe 1 is directed through a low noise coaxial cable 2, a low noise current limiting resistor 3, and through closed contacts of a relay 5 to the summing junction 9 of an operational amplifier 10 configured as a current-to-voltage converter. An over-voltage protection device 4 protects against excessive voltages, and together with the current limiting resistor 3, provides an intrinsically safe network, allowing the probe 1 to be used in hazardous areas. Over-voltage devices 1A and 1B are provided to limit the maximum voltage within the probe itself should the cable become disconnected.

The operational amplifier 10 is a low noise, low drift amplifier and directs the signal from the probe 1 through resistors 6 and 7. The resistance configuration produces a low output impedance signal voltage at the amplifier output 8. The signal voltage equals the signal current multiplied by the effective resistance of the resistor 6, the voltage drop of which is modified by a voltage divider, which has stepped gain adjustment means (not shown).

Since the signal current may be of either polarity, the voltage signal at the output 8 can be either a positive or negative voltage. The output 8 is therefore connected to an absolute value circuit 12 which produces a positive voltage at its output 12A equal in magnitude to the positive or negative voltage magnitude at its input 12B. FIG. 2 schematically shows this circuit 12 in more detail.

If a positive voltage is applied to the input 34 of an operational amplifier 35 included in the circuit, this amplifier drives its output 35A positive so forward biasing a diode 36, reverse biasing a diode 41, and driving the input 38 of a second operational amplifier 39 positive. This in turn drives the second amplifier output 40 positive. The diode 41 is reverse biassed. Resistors 43 and 44 provide feedback to the input 42 of the amplifier 35 to cause the whole absolute value circuit 12 to act as a follower with a gain of +1.

When the incoming signal is a negative voltage, application of this voltage to the input 34 drives the output 35A negatively thereby reverse biasing the diode 36 and forward biasing the diode 41. The amplifier 35 acts to cause the input 42 to move negatively until it equals the negative signal input. The negative voltage at the input 42 causes a current to flow through the resistor 43. The input 38 of the amplifier 39 is held at zero volts by a resistor 37 and the output 40 drives positive enough to supply a current through the resistor 44 to equal the current through the resistor 43 and hold the input 45 at zero volts. Resistors 43 and 44 are equal to ensure that the positive voltage at the output 40 equals the negative voltage value at the input 42. The gain is -1.

The circuit 12 thus produces an output positive voltage which is equal in magnitude to the positive or negative voltage magnitude input.

Referring back to FIG. 1, the positive voltage at the absolute value circuit output 12A is directed, through switch 13, to a one pole low pass filter composed of a capacitor 15 and an adjustable resistor 14, which allows the filter time constant to be trimmed. A voltage follower buffer operational amplifier 16 receives the filtered signal at node 16A and drives, firstly, the meter 20, which can be a milliammeter scaled to read appropriately by a resistor 21, secondly, a comparator 22 which closes relay contacts available to the user and lights a red LED 23 when a selected threshold is exceeded, and thirdly, in the illustrated position of a switch 17, a voltage-to-current converter circuit 18 providing the instrumentation output.

FIG. 3 schematically shows the voltage-to-current circuit 18 in more detail. A voltage signal of 0 volts to 8 volts is input at node 46 and creates a current through a resistor 47 into the input 49 of an operational amplifier 51. This current is balanced by the current through resistors 61 and 48, so holding the input 49 at 0 volts. The amplifier 51 drives its output 50 to the voltage necessary to produce the balance at the input 49. The voltage at the amplifier output 50 is applied to a voltage divider formed by resistors 52 and 53 and the divided voltage is applied to the input 54 of an operational amplifier 55. The amplifier 55 responds by turning on a field effect transistor (FET) 59, driving a current through a resistor 57 and the FET 59 to a point of use or output 60. This current increases to the point at which the voltage across the resistor 57 at the amplifier input 56 equals the voltage at the input 54. The value of the resistor 57 determines the current value delivered through the FET 59.

By varying a resistor 61, the current through it is changed and the output 50 of the amplifier 51 changes to maintain the current balance at the input 49. By this mechanism, the subsequent current output through the FET 59 can be trimmed to a a convenient level to represent a zero (4mA) or full scale signal (20mA). As the signal at the node 46 goes positive, the voltage across the resistor 57 increases thereby increasing the output current at the output 60 up to 20 mA at 8 volts.

Referring back to FIG. 1, the output of the amplifier 10, which constitutes the input voltage to the voltage to current converter, circuit 18 in the other position of the switch 17, is temperature sensitive and it is automatically zeroed each minute. As shown in FIG. 1, when switch 11 is closed an integrating amplifier 27 drives a current through resistors 26 and 25 to the input 10A, forcing the output 8 to zero volts. During this time the input current from the probe 1 is decoupled by the input relay 5, so the integrating amplifier 27 balances out temperature caused offsets. The integrating amplifier 27 stores the voltage necessary to maintain the offset balancing current when switch 11 is opened and the relays 5 closes.

Relay 5 also connects the signal input to input 10A during the zeroing sequence to prevent charge build-up on the cable 2.

The auto zeroing step would cause all the outputs to go to their zero levels, except that the switch 13, the resistor 14 and the capacitor 15 act as a track and hold circuit. The last signal, before auto zeroing, is represented by the voltage on the capacitor 15, and before the auto zero can change this voltage, switch 13 opens. This holds the voltage on the capacitor 15 and the outputs to their last values while auto zeroing occurs. When the auto zeroing is complete, the switch 11 opens, and, after the new signal levels are established through to the absolute value circuit output 12A, the switch 13 closes. The requisite delay is formed in a delay circuit 30. A timing circuit 33 provides the timing signals necessary to effect auto zeroing approximately each minute and lights a yellow LED 31 when the auto zero is active.

A capacitively coupled probe 1P with over voltage protection, which produces an AC signal, can be used with the circuitry described. With this kind of probe 1P, a switch means including switches 29, 32, and 17, places the auto zeroing function in continuous operation and directs the signal from the current-to-voltage converter amplifier 8 directly to the voltage-to-current converter circuit 18.

The active components are, typically:
10 -- Burr, Brown OPA 104 CM
11/13 -- Harris Semiconductor HI1-200-5
16,21,27,35,39, -- RCA CA3240E
51,55 -- NATIONAL SEMICONDUCTOR LM1458
The passive components are, typically:
3 - 150KΩ(RL20)
6 - 100 MΩ
7 - 0 to 10kΩ
26 - 1 MΩ
25 - 100 Ω
14 - 0 to 1 MΩ
15 - 22 µF
37 - 4.7kΩ
43 - 10KΩ
44 - 10KΩ
47 - 10kΩ
48 - 10kΩ
61 - 5kΩ
52 - 4kΩ
53 - 1kΩ

## Claims

1. A flow measuring apparatus comprising sensor electrode means (1) insertable into a flow conduit, a read-out circuit (10,12,14) including a current to voltage conversion device (6), and an end use device (20), characterized in that the sensor electrode means comprises a triboelectric sensor electrode (1) insertable into a flow conduit for flow of solid particles (FP) in a suspending fluid and arranged for charge transfer interaction with the particles, and in that the read-out circuit (10,12,14) couples the electrode (1) to earth via the current-to-voltage conversion device (6), the conversion device having a conversion factor adjustable from 1x10⁸ V/A to 10¹² V/A, and comprises an absolute value device (12), and adjustment means (10,27,13,14,15) to adjust the current-to-voltage conversion device essentially continuously to counteract zero drifts induced therein by ambient temperature changes.

2. An apparatus as claimed in claim 1 wherein the adjustment means comprises switching means (5,11) constructed and arranged to periodically decouple the sensor electrode (1) from the conversion device (6) and to connect an integrator (27) to zero the conversion device (6).

3. An apparatus as claimed in claim 2 comprising sample and hold means (13,14,15) to apply the last voltage developed by the conversion device (6) to the end use device during the periods of electrode decoupling.

4. An apparatus as claimed in claim 1, 2 or 3 including voltage (1A,1B,4) and/or current (3) limiting means between the sensor electrode (1) and the read-out circuit (10,12,14).

5. An apparatus as claimed in claim 1, 2, 3 or 4 comprising an adjustable low-pass filter (14,15) at the output of the absolute value device (12).

6. An apparatus as claimed in any preceding claim wherein the end use device comprises a meter (20) and/or an adjustable set point relay output.

## Patentansprüche

1. Strömungsmeßvorrichtung mit einer Sensorelektrodeneinrichtung (1), die in eine Strömungsleitung einsetzbar ist, einer Ausleseschaltung (10, 12, 14), die eine Strom-Spannungswandlereinrichtung (6) enthält, und mit einem Endgerät (20), dadurch gekennzeichnet, daß die Sensorelektrodeneinrichtung eine triboelektrische Sensorelektrode (1) umfaßt, die in eine Strömungsleitung für den Strom von Feststoffteilchen (FP) in einem Suspensionsfluid einsetzbar und für eine Ladungsübertragungswechselwirkung mit den Teilchen angeordnet und ausgebildet ist, und daß die Ausleseschaltung (10, 12, 14) die Elektrode (1) über die Strom-Spannungswandlereinrichtung (6) mit Masse verbindet, wobei die Wandlereinrichtung einen Umwandlungsfaktor hat, der von 1x10⁸ V/A bis 10¹² V/A einstellbar ist, und eine Absolutwerteinrichtung (12) und eine Einstelleinrichtung (10, 27, 13, 14, 15) umfaßt, um die Strom-Spannungswandlereinrichtung im wesentlichen kontinuierlich so nachzustellen, daß Nullpunktsverschiebungen entgegengewirkt wird, die darin durch Änderungen in der Umgebungstemperatur hervorgerufen werden.

2. Vorrichtung nach Anspruch 1, bei der die Einstelleinrichtung eine Schalteinrichtung (5, 11) umfaßt, die so aufgebaut und angeordnet ist, daß die periodisch die Sensorelektrode (1) von der Wandlereinrichtung (6) löst und mit einem Integrator (27) verbindet, um die Wandlereinrichtung (6) auf Null zu setzen.

3. Vorrichtung nach Anspruch 2 mit einer Tastspeichereinrichtung (13, 14, 15), um die letzte durch die Wandlereinrichtung (6) entwickelte Spannung an das Endgerät während der Zeitintervalle zu legen, in denen die Elektrode gelöst ist.

4. Vorrichtung nach Anspruch 1, 2 oder 3, welche eine Spannungs (1A, 1B, 4) -und/oder Strom (3) -Begrenzungseinrichtung zwischen der Sensorelektrode (1) und der Ausleseschaltung (10, 12, 14) enthält.

5. Vorrichtung nach Anspruch 1, 2, 3 oder 4 mit einem einstellbaren Tiefpassfilter (14, 15) am Ausgang der Absolutwerteinrichtung (12).

6. Vorrichtung nach einem vorhergehenden Anspruch, bei der das Endgerät ein Meßgerät (20) und/oder ein Ausgangsrelais mit einstellbarem Einstellwert ist.

## Revendications

1. Appareil de mesure de débit comprenant une électrode de détection (1) qui peut être insérée dans un conduit d'écoulement, un circuit de lecture (10,12,14) comportant un dispositif de conversion de courant en tension (6), et un dispositif d'utilisation finale (20), caractérisé en ce que l'électrode de détection est une électrode de détection triboélectrique (1) qui peut être insérée dans un conduit d'écoulement, pour l'écoulement de particules solides (FP) dans un fluide de suspension, et agencée pour une interaction de transfert de charge avec les particules, et en ce que le circuit de lecture (10,12,14)relie l'électrode (1) à la terre par l'intermédiaire du dispositif de conversion de courant en tension (6), le dispositif de conversion ayant un facteur de conversion réglable de 1x10⁸ V/A à 10¹² V/A, et comprend un dispositif de valeur absolue (12) et des moyens de réglage (10,27,13,14,15) pour ajuster le dispositif de conversion de courant en tension de façon sensiblement continue afin de compenser les dérives de zéro qui y sont induites par les changements de la température ambiante.

2. Appareil suivant la revendication 1, dans lequel les moyens de réglage comprennent des moyens de commutation (5,11) construits et agencés pour déconnecter périodiquement l'électrode de détection (1) du dispositif de conversion (6) et pour connecter un intégrateur (27) afin de mettre à zéro le dispositif de conversion (6).

3. Appareil suivant la revendication 2, comprenant des moyens d'échantillonnage et de maintien (13,14,15) pour appliquer la dernière tension produite par le dispositif de conversion (6) au dispositif d'utilisation finale pendant les périodes de déconnexion de l'électrode.

4. Appareil suivant la revendication 1,2 ou 3, comprenant des moyens de limitation de tension (1A, 1B,4) et/ou de courant (3) entre l'électrode de détection (1) et le circuit de lecture (10,12,14).

5. Appareil suivant la revendication 1,2, 3 ou 4, comprenant un filtre passe-bas ajustable (14, 15) à la sortie du dispositif de valeur absolue (12).

6. Appareil suivant l'une quelconque des revendications précédentes, dans lequel le dispositif d'utilisation finale comprend un indicateur (20) et/ou une sortie de relais à point de consigne réglable.
